# EUROPEAN PATENT APPLICATION

(11) **EP 2 746 239 A1**
(43) Date of publication of application: **25.06.2014**
(21) Application number: 13157607.6
(22) Date of filing: 04.03.2013
(51) Int. Cl.: C04B 33/04, C04B 33/13, C04B 33/132, C04B 33/135, C04B 33/138, C04B 35/626

(54) **A glass-ceramic composition and method for manufacturing the same**

(30) Priority: 21.12.2012 US 201213725970
(71) Applicant: King Abdulaziz City for Science & Technology (KACST), 11442 Riyadh (SA)
(72) Inventor: Binhussain, Mohammed, 11442 Riyadh (SA); Colombo, Paolo, 35131 Padova (IT); Bernardo, Enrico, 35131 Padova (IT); Binmajed, Majed A., 11442 Riyadh (SA); Marangoni, Mauro, 35131 Padova (IT); Atalasi, Hamad H., 11442 Riyadh (SA); Alajmi, Amer M., 11442 Riyadh (SA); Altamimi, Abdulaziz, 11442 Riyadh (SA)
(74) Representative: Goddar, Heinz J.

(57) **Abstract**

The invention provides a glass-ceramic composition manufactured using conventional raw material and one or more waste materials, wherein the waste materials are capable of producing glass forming oxides and glass modifying oxides. The waste materials are selected from a group that includes cullet, pozzolanic waste and fly ash. The invention also provides a method for manufacturing the glass-ceramic composition.

## Description

### FIELD OF THE INVENTION

The invention generally relates to a glass-ceramic composition and a method for manufacturing the glass-ceramic composition. More specifically, the invention relates to a glass-ceramic composition manufactured using natural raw materials, industrial waste raw materials and waste-derived glass.

### BACKGROUND OF THE INVENTION

Glass ceramics are widely used in various industries. The glass ceramics are mainly used for manufacturing tiles due to properties such as, but not limited to, high strength, toughness, translucency or opacity, low or even negative thermal expansion, high temperature stability and high chemical durability.

Generally, the glass ceramics are produced using a two steps process. In first step, a glass is produced by a glass manufacturing process using different types of raw materials. During the second step, the glass is melted and casted into a mold or shaped using any techniques known to those ordinarily skilled in the art. The molten glass is cooled down and thereafter reheated to partly crystallize the glass during the second step.

An alternative method for manufacturing glass-ceramics includes sintering and crystallizing glass particles of suitable composition. Sintering temperature needs to be adjusted well above crystallization temperature and high heating rates are required to force the glass to sinter before extensive crystallization. For such adjustment, secondary glasses such as soda-lime scraps or recycled pharmaceutical borosilicate glasses are used as sintering aids. Alternatively, nucleation agents are typically added for aiding and controlling the crystallization process. The high heating rates required to force the glass to sinter before extensive crystallization consumes high amount of energy. Further, the glass ceramics produced using the conventional method exhibit only few desired mechanical and chemical properties as amount crystal phases in the glass ceramics is low.

Additionally, industrial wastes such as pozzolanic wastes, fly ash, limestone mining tailings, etc are immobilized by disposal in land-fills or immobilized in cement industries. Handling and disposal of such industrial waste may require additional cost and is also hazardous to the environment.

Therefore, there is a need to develop a method for manufacturing glass ceramics which is environment friendly, cost effective and has superior mechanical and chemical properties.

### BRIEF DESCRIPTION OF THE FIGURE

The accompanying figure together with the detailed description below forms part of the specification and serves to further illustrate various embodiments and to explain various principles and advantages all in accordance with the present invention.

FIG. 1 illustrates a flow diagram of a method for manufacturing a glass ceramic composition in accordance with an embodiment of the invention.

Fig. 2a illustrates X-ray diffraction patterns for a sample sintered at 1000°C, 1100°C, 1150°C, 1250°c for 30 minutes and Fig. 2b illustrates X-ray diffraction patterns for a sample sintered at 1000°C for 30 minutes.

### DETAILED DESCRIPTION OF THE INVENTION

Before describing in detail embodiments that are in accordance with the invention, it should be observed that the embodiments reside primarily for a glass ceramic composition and in method steps related to manufacturing the glass ceramic composition.

In this document, relational terms such as first and second, top and bottom, and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article or composition that comprises a list of elements does not include only those elements but may include other elements not expressly listed or inherent to such process, method, article or composition. An element proceeded by "comprises ...a" does not, without more constraints, preclude the existence of additional identical elements in the process, method, article or composition that comprises the element.

Generally speaking, pursuant to various embodiments, the invention provides a glass ceramic composition and a method for manufacturing the glass ceramic composition. The glass-ceramic composition is manufactured using conventional raw material such as silica sand, clay and limestone with one or more waste materials. The waste materials, which are capable of producing glass forming oxides and glass modifying oxides, are chosen. The waste materials are selected from a group that includes cullet, pozzolanic waste and fly ash.

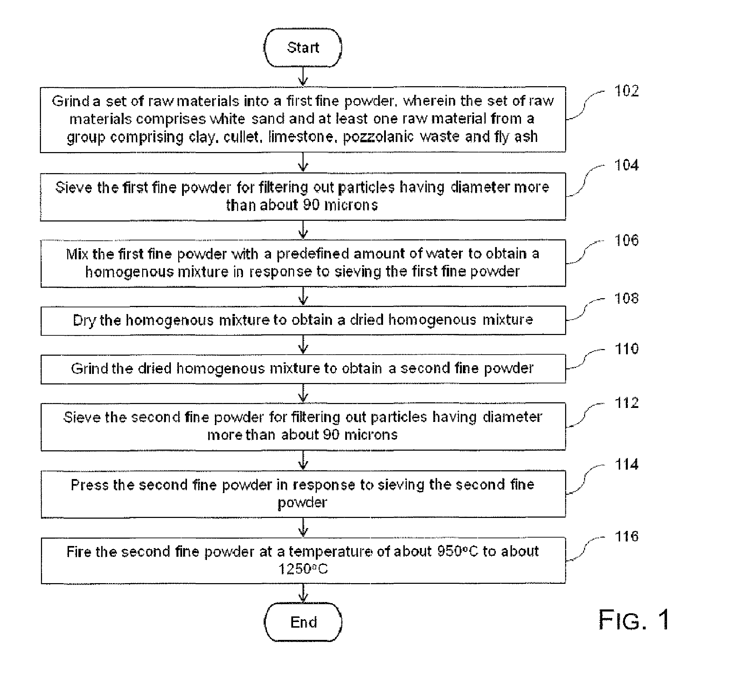

FIG. 1 illustrates a flow diagram of a method for manufacturing a glass ceramic composition in accordance with an embodiment of the invention.

A specific set of raw materials are used to manufacture the glass ceramic composition. The raw materials are selected based on a desired composition of the glass ceramics. The set of raw materials includes conventional raw material used to manufacture glass ceramics and one or more waste materials. The waste materials which are capable of producing glass forming oxides and glass modifying oxides are chosen. The glass forming oxides may include, but not limited to, silicon dioxide (SiO₂), boron trioxide (B₂O₃) and phosphorus pentoxide (P₂O₅). The glass modifying oxides may include, but not limited to, sodium oxide (Na₂O), potassium oxide (K₂O), calcium oxide (CaO) and magnesium oxide (MgO). Other oxides such as, but not limited to, aluminum oxide (Al₂O₃), titanium dioxide (TiO₂), zirconium dioxide (ZrO₂), ferric oxide (Fe₂O₃), and manganese dioxide (MnO₂) can also be produced in various degrees in final formulation of the glass ceramics. The conventional raw material includes white sand clay and limestone. The waste materials are selected from a group that includes cullet, pozzolanic waste and fly ash. The waste materials are selected in such a way that the selected waste materials provide high amount of crystallize phases in the final formulation of the glass ceramic composition. Cullet, glass waste from recycling plants, is very beneficial as use of cullet decreases time and temperature required during the manufacturing process of the glass-ceramics.

At step 102, a set of raw materials are ground into a first fine powder. Any suitable grinding machine such as, but not limited to, a roll crusher, a ball mill or an impeller breaker can be used for grinding the set of raw materials and as such those techniques would be apparent to those ordinarily skilled in the art.

In an embodiment, the set of raw materials includes about 10 wt % to about 40 wt % of white sand, about 5 wt % to about 40 wt % of clay, about 5 wt % to about 20 wt % of limestone, about 5 wt % to about 30 wt % of cullet, about 10 wt % to about 30 wt % of pozzolanic waste, and about 10 wt % to about 35 wt % of fly ash.

In another embodiment, the set of raw materials includes about 10 wt % to about 40 wt % of white sand, about 5 wt % to about 40 wt % of clay, about 5 wt % to about 15 wt % of cullet, about 10 wt % to about 30 wt % of pozzolanic waste, and about 15 wt % to about 35 wt % of fly ash.

In yet another embodiment, the set of raw materials includes about 10 wt % to about 40 wt % of white sand, about 10 wt % to about 40 wt % of clay, about 10 wt % to about 30 wt % of cutlet, about 5 wt % to about 20 wt % of limestone, and about 10 wt % to about 30 wt % of fly ash.

At step 104, the first fine powder is sieved to filter out particles of diameter more than about 90 microns (µ). The processing characteristics are optimized due to the use of particles of sizes of less than 90 µ.

At step 106, the first fine powder with particles of sizes less than 90 µ is mechanically mixed with a predefined amount of water to obtain a homogenous mixture. Any suitable mechanical mixing device can be used for mechanically mixing the first fine powder with particles of sizes less than 90 µ and the predefined amount of water. For example, mechanical mixing devices such as, but not limited to, magnetic stirring plates, vibrating plates and motor-driven stirring blades can be used for mechanically mixing the first fine powder with the particles of sizes less than 90 µ with the predefined amount of water. The purpose of adding limited amount of water is to avoid formation of volatile dust in the homogenous mixture.

At step 108, the homogenous mixture is allowed to dry. In accordance with the embodiment, the homogenous mixture is dried at a temperature of about 80°C for period of about 8 hours to about 10 hours. For example, the homogenous mixture can be dried at a temperature of about 80°C in an oven for period of about 8 hours to about 10 hours.

At step 110, the dried homogenous mixture is ground to obtain a second fine powder. Any suitable technique such as, but not limited to, a roll crusher, a ball mill or an impeller breaker can be used for grinding the set of raw materials and as such those techniques would be apparent to those ordinarily skilled in the art.

At step 112, the second fine powder is sieved to filter out particles of diameter more than about 90 µ. The processing characteristics are optimized due to the use of particles of sizes of less than 90 µ.

At step 114, the second fine powder with the particles of sizes less than 90 µ is pressed. In an embodiment, the second fine powder with the particles of sizes less than 90 µ is pressed using one of uniaxial cold pressing, biaxial cold pressing, dry pressing, semi-dry pressing, compacting, cold isostatic pressing, hot pressing, extrusion molding, injection molding, compression molding, gel casting, slip casting and tape casting. Any other suitable type of technique for pressing can be used at step 114 and as such the techniques which can be used would be apparent to those ordinarily skilled in the art. For example, the second fine powder with the particles of sizes less than 90 µ is uniaxially cold pressed at a pressure of about 20 Megapascal (MPa) to about 40 MPa in a mold.

At step 116, the second fine powder is fired at a temperature of about 950°C to about 1250°C. In accordance with the embodiment, the second fine powder is fired at a temperature of about 950°C to about 1250°C with a rate of about 40°C per minute to about 120°C per minute for a period of about 12 minutes to about 1 hour 30 minutes.

In various embodiments of the invention, the glass-ceramic composition includes about 50 wt % to about 60 wt % of silicon dioxide (SiO2), about 5 wt % to about 15 wt % of alumina (Al2O3), about 5 wt % to about 12 wt % of calcium oxide (CaO), about 5 wt % to about 20 wt % of sodium oxide (Na2O), about 2 wt % to about 10 wt % of potassium oxide (K2O), about 0.5 wt % to about 1.5 wt % of titanium dioxide (TiO2), and about 0.1 wt % to about 5 wt % of ferric oxide (Fe2O3).

The glass ceramic composition is prepared using the conventional raw material used to manufacture glass ceramics and one or more waste materials, wherein the waste materials are capable of producing glass forming oxides and glass modifying oxides. The glass forming oxides can include, but not limited to, silicon dioxide (SiO₂), boron trioxide (B₂O₃) and phosphorus pentoxide (P₂O₅). The glass modifying oxides can include, but not limited to, sodium oxide (Na₂O), potassium oxide (K₂O), calcium oxide (CaO) and Magnesium oxide (MgO). Other oxides such as, but not limited to, aluminum oxide (Al₂O₃), titanium dioxide (TiO₂), zirconium dioxide (ZrO₂), ferric oxide (Fe₂O₃), and manganese dioxide (MnO₂) can also be produced in various degrees in final formulation of the glass ceramics. The conventional raw material includes white sand, clay and limestone. The waste materials are selected from a group that includes cullet, pozzolanic waste and fly ash. Cullet, glass waste from recycling plants, is very beneficial as use of cullet decreases time and temperature required to produce the glass-ceramics.

In an embodiment, raw materials used to prepare the glass ceramic composition includes about 10 wt % to about 40 wt % of white sand, about 5 wt % to about 40 wt % of clay, about 5 wt % to about 20 wt % of limestone, about 5 wt % to about 30 wt % of cullet, about 10 wt % to about 30 wt % of pozzolanic waste, and about 10 wt % to about 35 wt % of fly ash.

In another embodiment, raw materials used to prepare the glass ceramic composition includes about 10 wt % to about 40 wt % of white sand, about 5 wt % to about 40 wt % of clay, about 5 wt % to about 15 wt % of cullet, about 10 wt % to about 30 wt % of pozzolanic waste, and about 15 wt % to about 35 wt % of fly ash.

In yet another embodiment, raw materials used to prepare the glass ceramic composition includes about 10 wt % to about 40 wt % of white sand, about 10 wt % to about 40 wt % of clay, about 10 wt % to about 30 wt % of cullet, about 5 wt % to about 20 wt % of limestone, and about 10 wt % to about 30 wt % of fly ash.

**Working Example 1**

A formulation including 30 wt % of white sand, 15 wt % of clay, 10 wt % of cullet, 20 wt % of pozzolanic waste and 25 wt % of flay ash is ground in a ball mill to obtain a first fine powder. After grinding, the first fine powder is sieved to filter out particles having diameter more than 90 microns. After sieving, small amount of water is added to prepare a homogenous mixture to avoid formation of volatile dust. The homogenous mixture is dried in an oven at a temperature of 80°C overnight. After drying overnight, the homogenous mixture is ground in a ball mill to obtain a second fine powder. After grinding, the second fine powder is sieved to filter out particles having diameter more than 90 microns. After sieving, the second fine powder is uniaxially cold pressed in a mold at a pressure of 20 MPa to 40MPa. The second fine powder in the mold is fired in an oven with a temperature of 950°C to 1250°C with a rate of 40°C per minute to 120°C per minute for a period of 12 minutes to 1 hour 30 minutes. After the firing step, a glass ceramic tile is formed in the mold.

**Working Example 2**

A formulation including 25 wt % of white sand, 25 wt % of clay, 15 wt % of cullet, 10 wt % of limestone and 25 wt % of fly ash are ground in a ball mill to obtain a first fine powder. After grinding, the first fine powder is sieved to filter out particles having diameter more than 90 microns. After sieving, small amount of water is added to prepare a homogenous mixture to avoid formation of volatile dust. The homogenous mixture is dried in an oven at a temperature of 80°C overnight. After drying overnight, the homogenous mixture is ground in a ball mill to obtain a second fine powder. After grinding, the second fine powder is sieved to filter out particles having diameter more than 90 microns. After sieving, the second fine powder is uniaxially cold pressed in a mold at a pressure of 20 MPa to 40MPa. The second fine powder in the mold is fired in an oven with a temperature of 950°C to 1250°C with a rate of 40°C per minute to 120°C per minute for a period of 12 minutes to 1 hour 30 minutes. After the firing step, a glass ceramic tile is formed in the mold.

The glass ceramic composition obtained using the method described above produces high amount of crystalline phases in CaO-SiO₂-Al₂O₃ system. The glass ceramic is not obtained by conventional method of sintering of glass powder, but is obtained directly from reaction of different raw materials during the step of firing in the method described above.

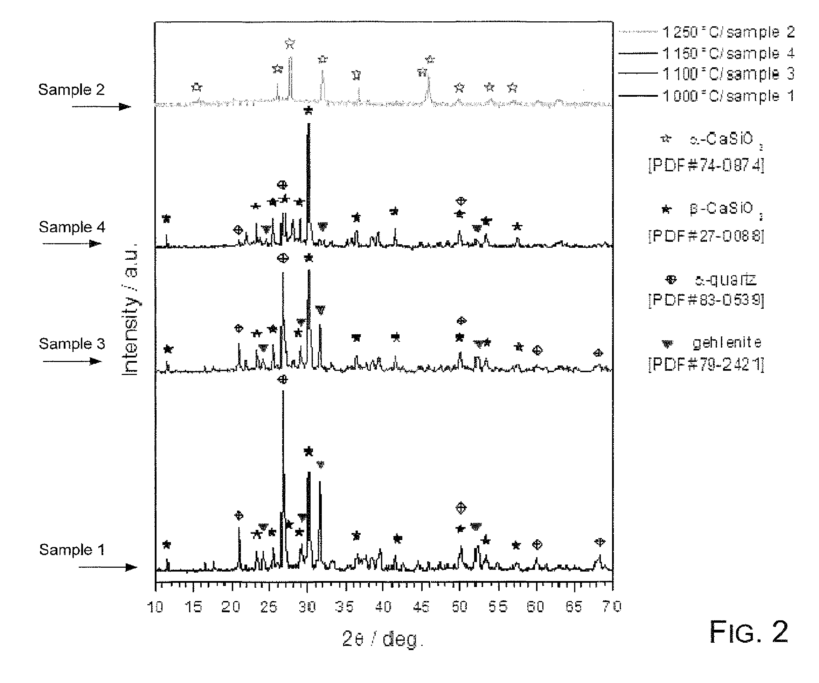

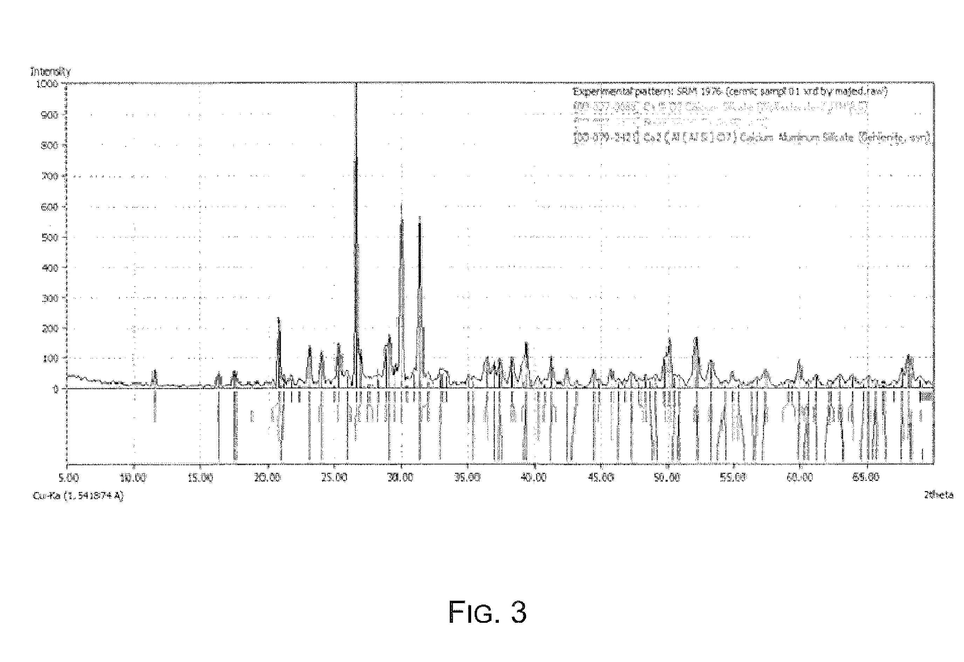

Fig. 2a illustrates X-ray diffraction patterns for a sample sintered at 1000°C, 1100°C, 1150°C, 1250°C for 30 minutes and Fig. 2b illustrates X-ray diffraction patterns for a sample sintered at 1000°C for 30 minutes. At a sintering temperature not lower than 1000°C, interactions between constituents are evident. As shown in Fig. 2a., intense quartz peaks are accompanied by peaks related to calcium silicate which is a phase named as wollastonite (β-CaSiO₃=β-CaO.SiO₂) and peaks related to calcium aluminosilicate which is a phase named as gehlenite (2CaO.Al₂O₃.SiO₂). While passing from 30 minutes to 1 hour at 1000°C, slight enhancement of peaks of the Wollastonite phase is determined and a remarkable increase of a phase corresponding Na-exchanged anorthite. The phase named labradorite and replacement of Ca²⁺ ions and Na⁺ is compensated by increase of Si^{4+/}Al³⁺ratio.

Further, the phase assemblage changes with increasing sintering temperature due to progressive dissolution of some components. The peaks related to gehlenite practically disappear and the peaks related to quartz are much lowered at 1150°C.

A liquid phase is promoted by softening of waste glass such as cullet gradually incorporates silica from sand and partially crystallizes into a species with relatively high silica content. The alumina-rich gehlenite disappears and the peaks related to wollastonite exhibit a slight increase of intensity. At highest sintering temperature, 1250°C, the "dissolution-recrystallization process" reaches the maximum, the only phase detected is pseudo-wollastonite (α-CaSiO₃=α-CaO.SiO₂) which is a high temperature variant of calcium silicate.

Various embodiments of the invention produce glass ceramic compositions with significantly improved properties. The mechanical characterization of a glass ceramic composition of the invention has Young's modulus in a range of about 35 Gigapascals (GPa) to about 45 GPa, bending strength of about 25 MPa to about 50 MPa and density of about 1.70 grams per cubic centimeter (g/cm3) to about 2.70 g/cm3. As glass ceramics are commonly used in manufacturing tiles for building industry, linear shrinkage is one of the issues after firing step in a process of manufacturing glass-ceramic tiles. Using the method of the invention, the linear shrinkage is limited to about -2% to about -8% in length, about -2% to about -8% in width, about -1% to about -10% in thickness due to the formation of a larger amount of liquid phase. This indicates there is a higher degree of densification during the formation of the glass ceramics using the method described above.

Various embodiments of the invention provides an environment friendly glass ceramics as the various industrial waste materials and waste glasses are used to manufacture the glass ceramics.

Those skilled in the art will realize that the above recognized advantages and other advantages described herein are merely exemplary and are not meant to be a complete rendering of all of the advantages of the various embodiments of the present invention.

In the foregoing specification, specific embodiments of the present invention have been described. However, one of ordinary skill in the art appreciates that various modifications and changes can be made without departing from the scope of the present invention as set forth in the claims below. Accordingly, the specification is to be regarded in an illustrative rather than a restrictive sense, and all such modifications are intended to be included within the scope of the present invention. The benefits, advantages, solutions to problems, and any element(s) that may cause any benefit, advantage, or solution to occur or become more pronounced are not to be construed as a critical, required, or essential features or elements of any or all the claims. The present invention is defined solely by the appended claims including any amendments made during the pendency of this application and all equivalents of those claims as issued.

## Claims

1. A method for manufacturing a glass-ceramic composition, the method comprising:
grinding a set of raw materials into a first fine powder, wherein the set of raw materials comprises white sand and at least one raw material from a group comprising clay, cullet, limestone, pozzolanic waste and fly ash;
sieving the first fine powder for filtering out particles having diameter more than about 90 microns;
mixing the first fine powder with a predefined amount of water to obtain a homogenous mixture in response to sieving the first fine powder, wherein the homogenous mixture is devoid of volatile dust;
drying the homogenous mixture to obtain a dried homogenous mixture;
grinding the dried homogenous mixture to obtain a second fine powder;
sieving the second fine powder for filtering out particles having diameter more than about 90 microns;
pressing the second fine powder in response to sieving the second fine powder; and
firing the second fine powder at a temperature of about 950°C to about 1250°C.

2. The method of claim 1, wherein the homogenous mixture is dried at a temperature of about 80°C for a period of about 8 hours to about 10 hours.

3. The method of claim 1, wherein the second fine powder is pressed using one of uniaxially cold pressing, biaxial cold pressing, dry pressing, semi-dry pressing, compacting, cold isostatic pressing, hot pressing, extrusion molding, injection molding, compression molding, gel casting, slip casting and tape casting.

4. The method of claim 1, wherein the second fine powder is fired at a temperature of about 950°C to about 1250°C with a rate of about 40°C per minute to about 120°C per minute for a period of about 12 minutes to about 1 hour 30 minutes.

5. The method of claim 1, wherein the set of raw materials comprises about 10 wt % to about 40 wt % of white sand, about 5 wt % to about 40 wt % of clay, about 5 wt % to about 20 wt % of limestone, about 5 wt % to about 30 wt % of cullet, about 10 wt % to about 30 wt % of pozzolanic waste, and about 10 wt % to about 35 wt % of fly ash.

6. The method of claim 1, wherein the set of raw materials comprises white sand, clay, cullet, pozzolanic waste and fly ash.

7. The method of claim 6, wherein the set of raw materials comprises about 10 wt % to about 40 wt % of white sand, about 5 wt % to about 40 wt % of clay, about 5 wt % to about 15 wt % of cullet, about 10 wt % to about 30 wt % of pozzolanic waste, and about 15 wt % to about 35 wt % of fly ash.

8. The method of claim 1, wherein the set of raw materials comprises white sand, clay, cullet, limestone, and fly ash.

9. The method of claim 8, wherein the set of raw materials comprises about 10 wt % to about 40 wt % of white sand, about 10 wt % to about 40 wt % of clay, about 10 wt % to about 30 wt % of cullet, about 5 wt % to about 20 wt % of limestone, and about 10 wt % to about 30 wt % of fly ash.

10. A composition of a glass-ceramic comprises about 50 wt % to about 60 wt % of silicon dioxide (SiO₂), about 5 wt % to about 15 wt % of alumina (Al₂O₃), about 5 wt % to about 12 wt % of calcium oxide (CaO), about 5 wt % to about 20 wt % of sodium oxide (Na₂O), about 2 wt % to about 10 wt % of potassium oxide (K₂O), about 0.5 wt % to about 1.5 wt % of titanium dioxide (TiO₂), and about 0.1 wt % to about 5 wt % of ferric oxide (Fe₂O₃).

11. The composition of claim 10, wherein raw materials for preparing the composition of the glass-ceramic comprises about 10 wt % to about 40 wt % of white sand, about 5 wt % to about 40 wt % of clay, about 5 wt % to about 20 wt % of limestone, about 5 wt % to about 30 wt % of cullet, about 10 wt % to about 30 wt % of pozzolanic waste, and about 10 wt % to about 35 wt % of fly ash.

12. The composition of claim 10, wherein raw materials for preparing the composition of the glass-ceramic comprises about 10 wt % to about 40 wt % of white sand, about 5 wt % to about 40 wt % of clay, about 5 wt % to about 15 wt % of cullet, about 10 wt % to about 30 wt % of pozzolanic waste, and about 15 wt % to about 35 wt % of fly ash.

13. The composition of claim 10, wherein raw materials for preparing the composition of the glass-ceramic comprises about 10 wt % to about 40 wt % of white sand, about 10 wt % to about 40 wt % of clay, about 10 wt % to about 30 wt % of cullet, about 5 wt % to about 20 wt % of limestone, and about 10 wt % to about 30 wt % of fly ash.
